# EUROPÄISCHE PATENTANMELDUNG

(11) **EP 4 674 648 A1**
(43) Veröffentlichungstag der Anmeldung: **07.01.2026**
(21) Anmeldenummer: 25185665.4
(22) Anmeldetag: 26.06.2025
(51) Int. Cl.: B60G 3/06, B60G 11/26, B62D 13/02

(54) **LANDWIRTSCHAFTLICHER FAHRZEUGANHÄNGER MIT EINER PENDELACHSE**

(30) Priorität: 05.07.2024 DE 102024002196
(71) Anmelder: Zunhammer, Sebastian, 83301 Traunreut (DE)
(72) Erfinder: Zunhammer, Sebastian, 83301 Traunreut (DE)
(74) Vertreter: Einsiedler, Johannes

(57) **Zusammenfassung**

Die Erfindung betrifft einen landwirtschaftlichen Fahrzeuganhänger (1) mit einem Tragkörper (2) und wenigstens einer Pendelachse (3), die von wenigstens zwei um eine gemeinsame Mittelachse (MA) pendelnden Achskörpern (4, 5) gebildet wird, wobei die Achskörper (4, 5) lenkbar ausgebildet sind, indem Räder über Lenklager (6, 7), Lenkhebel (8, 9) und Lenkholme (10, 11) am zugehörigen Achskörper (4, 5) angelenkt sind und über eine Spurstange (12) miteinander in Verbindung stehen, wobei die Lenklager (6, 7) auf einer gedachten Achse (GA) normal zu einer Fahrzeuglängsachse (LA) liegen und der Abstand der Lenklager (6, 7) auf der gedachten Achse (GA), die Lenkhebel (8, 9) und die Spurstange (12) ein Lenktrapez bilden, bei dem die kürzere parallele Seite des Lenktrapezes von der Spurstange (12) gebildet wird, welche zwischen der gedachten Achse (GA) durch die Lenklager (6, 7) und der gemeinsamen Mittelachse (MA) der pendelnden Achskörper (4, 5) angeordnet ist. Dabei ist die Pendelachse (3) als Pendel-Einzelachse (3') ausgebildet und mindestens ein Feder- und/oder Dämpferelement (13, 14) je zwischen einem der Achskörper (4, 5) und dem Tragkörper (2) angeordnet.

## Beschreibung

Die Erfindung betrifft einen landwirtschaftlichen Fahrzeuganhänger mit einem Tragkörper und einer Pendelachse, die als Pendel-Einzelachse ausgebildet ist.

Es ist bekannt, landwirtschaftliche Fahrzeuganhänger mit einem Tragkörper und einer Pendelachse auszurüsten, die von zwei um eine gemeinsame Mittelachse pendelnden Achskörpern gebildet wird. Dabei ist aus der DE 20 2004 000 605 U1 zudem bekannt, dass die Achskörper einer Pendel-Tandemachse dabei lenkbar ausgebildet sein können und sogar ein Lenktrapez ausbilden können. Bei ebenfalls bekannten herkömmlichen Einzelradaufhängungen solcher landwirtschaftlicher Fahrzeuganhänger ist dies bauartbedingt so nicht umsetzbar.

Nachteilig ist an den bekannten Systemen z.B., dass Pendel-Tandemachsen zuweilen am ungefedert auspendelnden Achsteil einen höheren punktuellen Lasteintrag in den Nutzboden verursachen können und hingegen bei Einzelradaufhängungen z.B. ein Einfedern oder Ausfedern den eingeschlagenen Lenkwinkel beeinflusst.

Als Aufgabe der vorliegenden Erfindung kann es daher angesehen werden, eine Handhabung eines landwirtschaftlichen Fahrzeuganhänger auf einfache Weise zu verbessern, insbesondere eine Kombination einer reifenschonenden und bodenschonenden Wirkung eines Lenktrapezes in Kombination mit einer sehr gelichmäßigen Bodenlastverteilung und ebenso großer Bodenfreiheit zu ermöglichen.

Diese Aufgabe wird erfindungsgemäß durch den Gegenstand des unabhängigen Anspruchs 1 gelöst, sowie durch die Verwendung gemäß dem unabhängigen Anspruch 10. Vorteilhafte Ausführungsformen sind Gegenstand der abhängigen Ansprüche.

Die Erfindung beruht auf dem allgemeinen Gedanken, einen landwirtschaftlichen Fahrzeuganhänger mit einer lenkbaren Pendelachse auszustatten, die als Pendel-Einzelachse ausgebildet ist.

Der Inhalt der DE 20 2004 000 605 U1 soll hier, um Wiederholungen zu vermeiden, insbesondere, soweit er die Lenkfähigkeit und die Ausbildung des lenkbaren Teils mit dem Lenktrapez betrifft, als vollständig mit aufgenommen und einbezogen gelten.

Erfindungsgemäß weist der landwirtschaftliche Fahrzeuganhänger einen Tragkörper und eine Pendelachse auf, die von zwei um eine gemeinsame Mittelachse pendelnden Achskörpern gebildet wird. Die Achskörper sind dabei lenkbar ausgebildet, indem Räder über Lenklager, Lenkhebel, und Lenkholme, am zugehörigen Achskörper angelenkt sind und über eine Spurstange miteinander in Verbindung stehen. Die Lenklager liegen dabei auf einer gedachten Achse, die normal zu einer Fahrzeuglängsachse verläuft. Der Abstand der Lenklager auf dieser gedachten Achse (d.h. einer gedachten Linie entlang dieser gedachten Achse von einem Lenklager zu dem anderen Lenklager), die Lenkhebel, und die Spurstange bilden dabei ein Lenktrapez, bei dem die kürzere parallele Seite des Lenktrapezes von der Spurstange gebildet wird, welche zwischen der gedachten Achse durch die Lenklager und der gemeinsamen Mittelachse der pendelnden Achskörper angeordnet ist.

Erfindungsgemäß ist die Pendelachse als Pendel-Einzelachse ausgebildet. Dadurch wird es ermöglicht, an ein und demselben landwirtschaftlichen Fahrzeuganhänger sowohl verschiedene Vorteile nutzen zu können, die ansonsten nur mit einer Pendel-Tandemachse zu erreichen sind und gleichermaßen von verschiedenen Vorteilen profitieren zu können, die sonst nur mit einer Einzelradaufhängung erreichbar sind. So kann z. B. eine Lenkwinkeltreue beim Einfedern ermöglicht werden, wie sie sonst zwar mit einer Pendel-Tandemachse erreicht werden kann, jedoch mit üblichen Einzelradaufhängungen bauartbedingt nicht zu erreichen ist, da die Winkeländerung beim Einfedern dort auch auf die Spurstange einwirkt. Gleichermaßen können dadurch Lenkzylinder deutlich näher an der gemeinsamen Mittelachse, hier der Pendelachse, angeordnet werden, als bei herkömmlichen Einzelradaufhängungen. Dadurch können die Lenkzylinder einen geringeren Durchmesser aufweisen und vor Allem einen größeren Abstand vom Fahrbahnbelag bzw. von der zu befahrende Fläche aufweisen. Dadurch können Beschädigungen durch Unebenheiten oder z.B. größere Steine effektiver vermieden werden. Insbesondere kann jedoch gleichermaßen ein echtes Lenktrapez erreichten werden und dennoch eine Bodenbelastung besonders gleichmäßig verteilt werden, ganz besonders bei Fahrzeuganhängern mit mehreren Achsen. Mit dem echten Lenktrapez kann bei Kurvenfahrt die Anpassung der Radwinkel an den kleineren Innenkreis den das kurveninnere Rad beschreibt und den größeren Außenkreis den das kurvenäußere Rad beschreiben muss erreicht werden. Zudem kann das Fahrwerk des landwirtschaftlichen Fahrzeuganhängers herstellerseitig besonders einfach und flexibel aus einer, der benötigten Traglast entsprechenden Anzahl an Achsen zusammengestellt werden, z. B. mit nur einer Achse, mit zwei Achsen von denen ggf. nur eine lenkbar zu sein braucht, oder mit drei Achsen, von denen ggf. nur die vordere und die hintere lenkbar zu sein braucht.

Da die Pendelachse als Pendel-Einzelachse ausgebildet ist, wird im Unterschied zu einer Pendel-Tandemachse eine Rotation der Achskörper um die gemeinsame Mittelachse nicht durch den normal zur gemeinsamen Mittelachse gegenüberliegenden Pendelachskörper verhindert. Vielmehr ist hier vorteilhaft ein Feder- und/oder Dämpferelementje zwischen einem der Achskörper und dem Tragkörper angeordnet. Dadurch kann, im Gegensatz zu einer Pendel-Tandemachse, das Feder- und/oder Dämpfungsverhalten herstellerseitig gezielt beeinflusst und angepasst werden, wie ansonsten nur bei einer Einzelradaufhängung. Gleichzeitig kann, durch das echte Lenktrapez, ein besonders reifenschonender Betrieb auf Straßen und hartem Untergrund, insbesondere beim Rangieren oder bei engen Kurven, und ein besonders bodenschonender Betrieb auf landwirtschaftlichem Nutzboden, insbesondere bei Kurvenfahrten, ermöglicht werden.

In einer vorteilhaften Weiterbildung der erfindungsgemäßen Lösung ist das Feder- und/oder Dämpferelement entlang der Fahrzeuglängsachse je zwischen der gemeinsamen Mittelachse und dem Lenklager angeordnet. Dies scheint zwar zunächst dem im Fahrwerksbau allgemein verbreiteten Bestreben, die ungefederte Masse möglichst gering zu halten, unvereinbar entgegenzustehen. Es ermöglicht hier jedoch einerseits einen großen möglichen Lenkwinkelbereich bei besonders großer Lenkwinkeltreue und andererseits wiederum eine sehr große Bodenfreiheit und eine noch effektivere Vermeidung von Beschädigungen durch Unebenheiten oder z.B. größere Steine.

In einer weiteren vorteilhaften Weiterbildung der erfindungsgemäßen Lösung ist das Feder- und/oder Dämpferelement im Normalbetrieb oberhalb des jeweiligen Achskörpers angeordnet. Dadurch ist es nicht nur besonders effektiv vor Beschädigungen und Verschmutzungen geschützt. Es wird auch gleichermaßen eine besonders vorteilhafte Krafteinleitung in den jeweiligen Achskörper ermöglicht. Als Normalbetrieb des landwirtschaftlichen Fahrzeuganhängers soll hier insbesondere ein Betrieb angesehen werden, bei dem der landwirtschaftliche Fahrzeuganhänger für eine Fahrt an ein landwirtschaftliches Fahrzeug angehängt ist, oder zum Anhängen an das landwirtschaftliche Fahrzeug für eine Fahrt bereit ist. Nicht als Normalbetrieb soll vorliegend eine Betriebssituation angesehen werden, in der dasselbe Feder und/oder Dämpferelement nicht oberhalb des jeweiligen Achskörpers angeordnet ist. Beispielsweise soll eine Situation mit einem umgekippten Fahrzeuganhänger oder einem z.B. zum Transport umgekehrt, d.h. mit einer Ladefläche nach unten, abgelegten Fahrzeuganhänger sowie dementsprechende Darstellungen nicht als Normalbetrieb angesehen werden.

In einer weiteren vorteilhaften Weiterbildung der erfindungsgemäßen Lösung weist mindestens ein Feder- und/oder Dämpferelement einen Leitungsanschluss auf. Dadurch wird ermöglicht, dass eine bei einer Pendel-Tandemachse rein mechanisch über das Pendel vom vorhergehenden oder dahinter angeordneten Achsteil weitergegebene Auswirkung einer überfahrenen Unebenheit des Untergrunds hier hydraulisch oder pneumatisch übertragen wird. Der Pendel-Effekt kann demnach über eine hydraulische Verbindung z.B. einer vorderen Achse mit einer hinteren Achse erzeugt werden. Gleichermaßen kann hierdurch ein Anschluss an Ventile oder Steuermodule besonders einfach ermöglicht werden.

In einer weiteren vorteilhaften Weiterbildung der erfindungsgemäßen Lösung ist mindestens ein Feder- und/oder Dämpferelement über den Leitungsanschluss mit einem Gasmembranspeicher verbunden. Dadurch kann z.B. eine Auswirkung einer überfahrenen Unebenheit des Untergrunds besonders vorteilhaft zwischengespeichert oder z.B. nur teilweise weitergegeben werden. Gleichermaßen kann dadurch eine komfortable Anpassung an verschiedene Beladungszustände auf sehr einfache Weise ermöglicht werden.

In einer weiteren vorteilhaften Weiterbildung der erfindungsgemäßen Lösung sind mindestens zwei Feder- und/oder Dämpferelemente über ihre Leitungsanschlüsse, insbesondere mittels Leitungen, miteinander und/oder mit dem Gasmembranspeicher verbunden. Dadurch kann nicht nur eine besonders gleichmäßige Verteilung der Bodenlast und eine komfortable Anpassung an verschiedene Beladungszustände sehr einfach erreicht werden, sondern auch eine komfortable Anpassung an verschiedene Bodengegebenheiten besonders einfach ermöglicht werden.

In einer weiteren vorteilhaften Weiterbildung der erfindungsgemäßen Lösung verfügt der lenkbar ausgebildet Achskörper über eine Stabilisierungseinrichtung für einen Geradeauslauf.

Dadurch können sämtliche der vorgenannten Vorteile genutzt werden und dennoch, insbesondere neben der hohen Lenkwinkeltreue, auch gleichermaßen ein besonders präziser Geradeauslauf erreicht werden.

In einer weiteren vorteilhaften Weiterbildung der erfindungsgemäßen Lösung weist die Stabilisierungseinrichtung zur Abstützung der Lenkhebel am Achskörper in jedem Lenklager wenigstens ein Paar von Druckelementen mit wellenförmigen oder trapezförmigen, ineinandergreifenden Gleitflächen auf, welche die Lenkhebel gegen eine Gegenkraft am Achskörper abstützen. Als wellenförmig soll dabei insbesondere eine sinus- bzw. kosinusförmige, oder an diese angenäherte, Gestaltung angesehen werden. Durch derartig gestaltete Gleitflächen kann der Übergang zwischen einer Geradeausfahrt und einem Lenkeinschlag besonders kräfte- und materialschonend und angenehm gestaltet werden. Als trapezförmig soll dabei insbesondere eine gleichmäßige Trapezform mit linienartigen Kanten angesehen werden, was jedoch eine ungleichmäßige Trapezform und/oder abgerundete Kanten und/oder abgerundete Flächen nicht ausschließen soll. Hierdurch kann sehr einfach eine besonders stabile und winkeltreue Geradeausfahrt erreicht werden.

In einer weiteren vorteilhaften Weiterbildung der erfindungsgemäßen Lösung ist entlang der gemeinsamen Mittelachse, um die die Achskörper pendeln, ein Mittelachsrohr angeordnet. Dadurch wird nicht nur auf besonders einfache und effektive Weise eine Steifigkeit des Tragkörpers und der gesamten Achse gleichermaßen erreicht. Es können dadurch auch alle anderen Vorteile der besonders robusten und gleichermaßen unkomplizierten Pendellagerung einer Pendel-Tandemachse, die sich im landwirtschaftlichen Einsatz besonders bewährt hat, mit der lenkbaren Pendel-Einzelachse genutzt werden.

Die eingangs genannte Aufgabe wird zudem erfindungsgemäß durch eine Verwendung eines landwirtschaftlichen Fahrzeuganhängers nach den Aspekten der vorhergehenden Beschreibung bei der Fahrt zu- oder auf einer landwirtschaftlichen Nutzfläche gelöst. Nicht nur kommen die meisten der genannten Vorteile einzeln oder in der genannten Kombination erst hierbei komplett zum Tragen. Vor Allem kann jedoch die reifenschonende und bodenschonende Wirkung des echten Lenktrapezes in Kombination mit der gleichmäßigen Bodenlastverteilung und der ermöglichten Bodenfreiheit erst hierbei vollständig ausgenutzt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Insbesondere sind die genannten Merkmale in diesem Rahmen jeweils nicht auf die genannte Anzahl beschränkt, so dass in Einzahl genannte Merkmale durchaus mehrfach vorhanden und mehrfach vorkommende Merkmale auch in Einzahl vorhanden sein können.

Bevorzugte Ausführungsbeispiele der Erfindung sind in der Zeichnung dargestellt und werden in der nachfolgenden Beschreibung näher erläutert, wobei sich gleiche Bezugszeichen auf gleiche oder ähnliche oder funktional gleiche Bauteile beziehen.

Dabei zeigen jeweils schematisch:
- Fig. 1:: eine Achse eines erfindungsgemäßen landwirtschaftlichen Fahrzeuganhängers in perspektivischer Seitenansicht, bei der das linke Rad ausgeblendet ist,
- Fig. 2:: eine Unteransicht eines landwirtschaftlichen Fahrzeuganhängers mit der Achse nach Fig.1, bei einer Geradeausfahrt,
- Fig. 3:: eine Unteransicht der Achse nach Fig.1 und 2, bei einer Rechtskurvenfahrt,
- Fig. 4:: eine Unteransicht der Achse nach Fig.1, 2 und 3, bei einer Linkskurvenfahrt,
- Fig. 5:: eine Draufsicht auf das Lenktrapez, das die beschriebene Ausgestaltung ermöglicht.

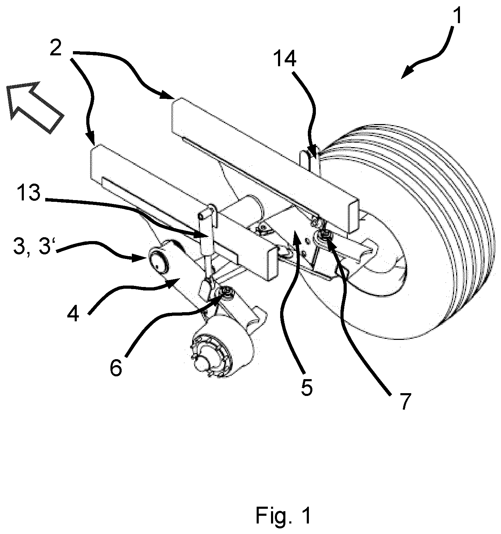

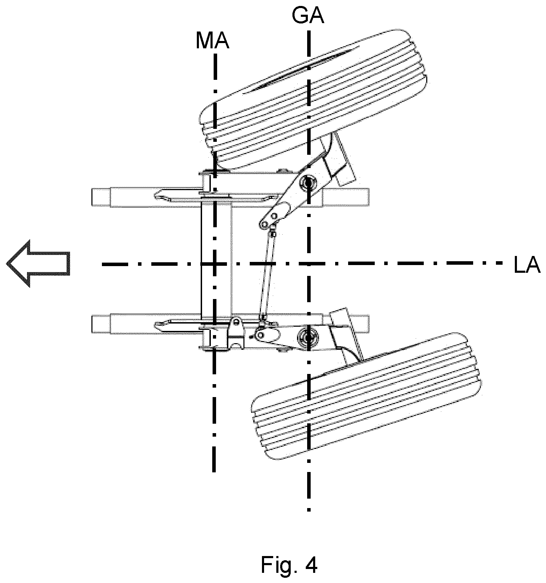

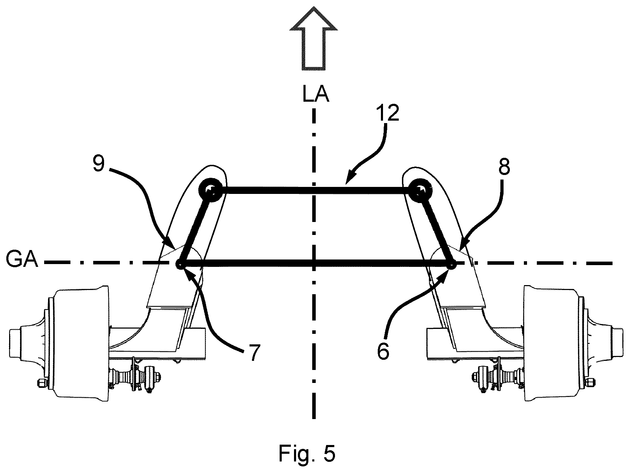

Eine Ausgestaltung des erfindungsgemäßen landwirtschaftlichen Fahrzeuganhängers 1 weist entsprechend der Fig. 1 neben einem Tragkörper 2 eine Pendelachse 3 auf, die hier als Pendel-Einzelachse 3' ausgebildet ist. Der große Pfeil neben dem Bezugszeichen 2 zeigt in Fahrtrichtung nach vorne. Die Pendel-Einzelachse 3' wird von zwei um eine gemeinsame Mittelachse MA (ersichtlich in Figur 4) pendelnden Achskörpern 4, 5 gebildet. Die Achskörper 4, 5 sind dabei lenkbar ausgebildet, indem (hier nicht näher bezeichnete) Räder über Lenklager 6, 7, Lenkhebel 8, 9 und Lenkholme 10, 11 am zugehörigen Achskörper 4, 5 angelenkt sind und über eine Spurstange 12 miteinander in Verbindung stehen. Die Lenklager 6, 7 liegen dabei auf einer gedachten Achse GA normal zu einer Fahrzeuglängsachse LA (ersichtlich in Figur 4). Der Abstand der Lenklager 6, 7 auf der gedachten Achse GA, die Lenkhebel 8, 9 und die Spurstange 12 bilden dabei ein Lenktrapez (ersichtlich in Figur 5), bei dem die kürzere parallele Seite des Lenktrapezes von der Spurstange 12 gebildet wird, welche zwischen der gedachten Achse GA durch die Lenklager 6, 7 und der gemeinsamen Mittelachse MA der pendelnden Achskörper 4, 5 angeordnet ist. Da die Pendelachse 3 als Pendel-Einzelachse 3' ausgebildet ist, wird im Unterschied zu einer Pendel-Tandemachse eine Rotation der Achskörpern 4, 5 um die gemeinsame Mittelachse MA nicht durch einen normal zur gemeinsamen Mittelachse MA gegenüberliegenden Tandem-Pendelachskörper verhindert. Hierfür sind zwei als Gasdruckdämpfer ausgebildete Feder- und Dämpferelemente 13, 14 je zwischen einem der Achskörper 4, 5 und dem Tragkörper 2 angeordnet. Dadurch wird besonders Vorteilhaft ermöglicht, an ein und demselben landwirtschaftlichen Fahrzeuganhänger 1 sowohl verschiedene Vorteile nutzen zu können, die ansonsten nur mit einer Pendel-Tandemachse zu erreichen sind und gleichermaßen von verschiedenen Vorteilen profitieren zu können, die sonst nur mit einer Einzelradaufhängung erreichbar sind. Insbesondere kann auf einfache und robuste Weise ein besonders reifenschonender bzw. bodenschonender Betrieb bei großer herstellerseitiger Anpassungsflexibilität ermöglicht werden.

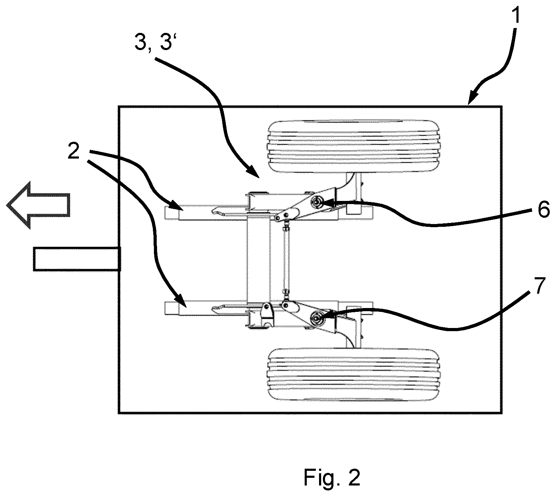

Die Feder- und Dämpferelemente sind entlang der Fahrzeuglängsachse LA je zwischen der gemeinsamen Mittelachse MA und dem Lenklager 6, 7 angeordnet. In Figur 1 ist auch erkennbar, dass die Feder- und Dämpferelemente 13, 14 im Normalbetrieb oberhalb des jeweiligen Achskörpers 4, 5 angeordnet sind. Die Feder- und Dämpferelemente 13, 14 weisen je zwei nicht näher dargestellte Leitungsanschlüsse auf. Über einen dieser Leitungsanschlüsse sind sie je mit einem nicht dargestellten Gasmembranspeicher verbunden und mittels ebenfalls nicht dargestellter Leitungen miteinander verbunden. Zudem verfügt der Achskörper 4, 5 über eine Stabilisierungseinrichtung für einen Geradeauslauf, die in jedem Lenklager 6, 7 in Paar von Druckelementen mit trapezförmigen, ineinandergreifenden Gleitflächen aufweist, welche die Lenkhebel 8, 9 gegen eine Gegenkraft am Achskörper 4 ,5 abstützen. Der Geradeauslauf ist in der Unteransicht der Figur 2 dargestellt.

Wie in Figur 2 erkennbar, ist an der gemeinsamen Mittelachse MA, um die die Achskörper 4, 5 pendeln, ein Mittelachsrohr angeordnet. Der große Pfeil in Figur 2, 3 und 4 je links zeigt je die Fahrtrichtung vorwärts an. In Figur 5 zeigt der große Pfeil nach oben die Fahrtrichtung vorwärts an.

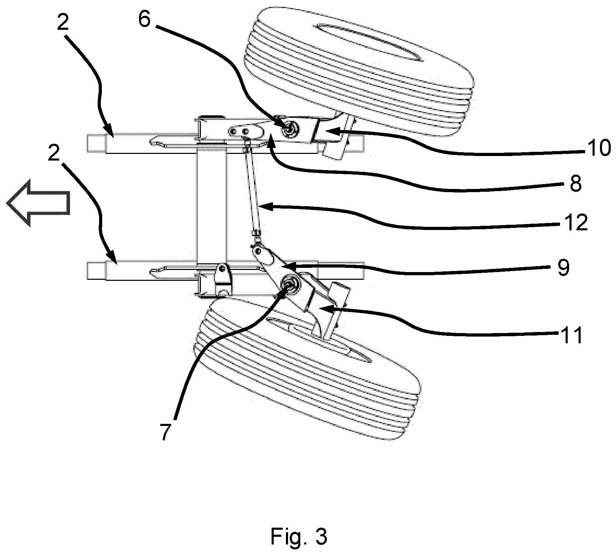

Wie in den Figure 3 und 4 erkennbar, ist durch die Ausbildung der Pendel-Einzelachse 3' neben allen vorhergehend beschriebenen Vorteilen an der Einzelachse ein echtes umgekehrtes Lenktrapez verwirklicht, wie in Figur 5 erkennbar. Die Einschlagwinkel des je kurveninneren und kurvenäußeren Rades unterscheiden sich - um den jeweils gleichen Betrag bei der Rechtskurvenfahrt, die in Figur 3 dargestellt ist und der Linkskurvenfahrt, die in Figur 4 dargestellt ist. Die Winkelunterschiede sind jedoch wie im Fahrzeugbau üblich so gering, dass sie in der Darstellung der Figuren 3 und 4 mit bloßem Auge nicht ersichtlich sind. Jedoch bewirken diese Winkelunterschiede, dass bei der Verwendung des landwirtschaftlichen Fahrzeuganhängers 1 alle vorbeschriebenen Vorteile gleichermaßen genutzt werden können.

Ganz besonders kann hierbei die reifenschonende und bodenschonende Wirkung des echten Lenktrapezes in Kombination mit der gelichmäßigen Bodenlastverteilung und der ermöglichten Bodenfreiheit vollständig ausgenutzt werden.

### BEZUGSZEICHENLISTE

- 1: Landwirtschaftlicher Fahrzeuganhänger
- 2: Tragkörper
- 3: Pendelachse
- 3': Pendel-Einzelachse
- 4, 5: Achskörper
- 6, 7: Lenklager
- 8, 9: Lenkhebel
- 10, 11: Lenkholme
- 12: Spurstange
- 13, 14: Feder- und Dämpferelement

- MA: gemeinsame Mittelachse
- LA: Fahrzeuglängsachse
- GA: gedachte Achse

## Patentansprüche

1. Landwirtschaftlicher Fahrzeuganhänger (1) mit einem Tragkörper (2) und wenigstens einer Pendelachse (3), die von wenigstens zwei um eine gemeinsame Mittelachse (MA) pendelnden Achskörpern (4, 5) gebildet wird, wobei die Achskörper (4, 5) lenkbar ausgebildet sind, indem Räder über Lenklager (6, 7), Lenkhebel (8, 9) und Lenkholme (10, 11) am zugehörigen Achskörper (4, 5) angelenkt sind und über eine Spurstange (12) miteinander in Verbindung stehen, wobei die Lenklager (6, 7) auf einer gedachten Achse (GA) normal zu einer Fahrzeuglängsachse (LA) liegen und der Abstand der Lenklager (6, 7) auf der gedachten Achse (GA), die Lenkhebel (8, 9) und die Spurstange (12) ein Lenktrapez bilden, bei dem die kürzere parallele Seite des Lenktrapezes von der Spurstange (12) gebildet wird, welche zwischen der gedachten Achse (GA) durch die Lenklager (6, 7) und der gemeinsamen Mittelachse (MA) der pendelnden Achskörper (4, 5) angeordnet ist, **dadurch gekennzeichnet, dass** die Pendelachse (3) als Pendel-Einzelachse (3') ausgebildet ist, und dass mindestens ein Feder- und/oder Dämpferelement (13, 14) je zwischen einem der Achskörper (4, 5) und dem Tragkörper (2) angeordnet ist.

2. Landwirtschaftlicher Fahrzeuganhänger (1) nach Anspruch 1, **dadurch gekennzeichnet, dass** das Feder- und/oder Dämpferelement entlang der Fahrzeuglängsachse (LA) je zwischen der gemeinsamen Mittelachse (MA) und dem Lenklager (6, 7) angeordnet ist.

3. Landwirtschaftlicher Fahrzeuganhänger (1) nach einem der vorangehenden Ansprüche, **dadurch gekennzeichnet, dass** das Feder- und/oder Dämpferelement (13, 14) in einem Normalbetrieb oberhalb des jeweiligen Achskörpers (4, 5) angeordnet ist.

4. Landwirtschaftlicher Fahrzeuganhänger (1) nach einem der vorangehenden Ansprüche, **dadurch gekennzeichnet, dass** mindestens ein Feder- und/oder Dämpferelement (13, 14) einen Leitungsanschluss aufweist.

5. Landwirtschaftlicher Fahrzeuganhänger (1) nach Anspruch 4, **dadurch gekennzeichnet, dass** mindestens ein Feder- und/oder Dämpferelement (13, 14) über den Leitungsanschluss mit einem Gasmembranspeicher verbunden ist.

6. Landwirtschaftlicher Fahrzeuganhänger (1) nach Anspruch 4 und/oder 5, **dadurch gekennzeichnet, dass** mindestens zwei Feder- und/oder Dämpferelemente (13, 14) über ihre Leitungsanschlüsse, insbesondere mittels Leitungen, miteinander und/oder mit dem Gasmembranspeicher verbunden sind.

7. Landwirtschaftlicher Fahrzeuganhänger (1) nach einem der vorangehenden Ansprüche, **dadurch gekennzeichnet, dass** der lenkbar ausgebildete Achskörper (4, 5) über eine Stabilisierungseinrichtung für einen Geradeauslauf verfügt.

8. Landwirtschaftlicher Fahrzeuganhänger (1) nach dem vorangegangenen Anspruch, **dadurch gekennzeichnet, dass** die Stabilisierungseinrichtung zur Abstützung der Lenkhebel (8, 9) am Achskörper (4, 5) in jedem Lenklager (6, 7) wenigstens ein Paar von Druckelementen mit wellenförmigen oder trapezförmigen, ineinandergreifenden Gleitflächen aufweist, welche die Lenkhebel (8, 9) gegen eine Gegenkraft am Achskörper (4 ,5) abstützen.

9. Landwirtschaftlicher Fahrzeuganhänger (1) nach einem der Ansprüche 1 bis 8, **dadurch gekennzeichnet, dass** entlang der gemeinsamen Mittelachse (MA), um die die Achskörper (4, 5) pendeln, oder parallel dazu, ein Mittelachsrohr angeordnet ist.

10. Verwendung eines landwirtschaftlichen Fahrzeuganhängers (1) nach einem der Ansprüche 1 bis 9 bei der Fahrt zu- oder auf einer landwirtschaftlichen Nutzfläche.
